Europäisches Patentamt

European Patent Office

Office européen des brevets

(11) Publication number: **0 421 261 A1**

## EUROPEAN PATENT APPLICATION

(21) Application number: **90118516.5**

(22) Date of filing: **27.09.90**

(51) Int. Cl.5: **B01J 47/02, C02F 1/42**

(30) Priority: **29.09.89 IT 6782289**

(43) Date of publication of application:
**10.04.91 Bulletin 91/15**

(84) Designated Contracting States:
**DE ES FR GB**

(71) Applicant: **MERLONI ELETTRODOMESTICI S.p.A.**
**Viale Aristide Merloni, 45**
**I-60044 Fabriano (AN)(IT)**

(72) Inventor: **Lattanzi, Giuseppe**
**Via Dante 7**
**Piandimeleto (PS)(IT)**
Inventor: **Verdini, Sandro**
**Via Martiri della Libertà 1**
**Sassoferrato (AN)(IT)**

(54) Ion exchange resin device.

(57) Ion exchange resin device, comprising a container, wherein said resin is contained, and having an inlet hole and an outlet hole which allow a fluid to be treated to pass through, characterized in that, in order to allow the fluid to best contact the resin, inside the container there are provided flow guide elements so arranged to oblige the fluid to follow a given path, inside the container, which is substantially longer than the direct line distance existing between the inlet hole and the outlet hole.

FIG.

# ION EXCHANGE RESIN DEVICE

The present invention refers to a ion exchange resin device, comprising a container, wherein said resin is contained, and having an inlet hole and an outlet hole, in order to allow a fluid to be treated to pass through.

As known, it is often necessary to modify the composition of a fluid, by varying the quality and the quantity of the chemical elements it contains.

This problems is particularly present when it is necessary to purify the water of the supply mains from element dangerous to the human health, for example polluting substances. In the case of treatment of the water supplied from the water mains, a very common need is the improvement of the efficiency of the dishwashing machines, by means of a water decalcifier. Particularly in this second case, the water decalcifiers, or softeners, used to reduce the water hardness in household appliances, like dishwashing machines or laundry washing machines, are usually of the ion exchange resins type, where said resins keep the calcium and magnesium ions of the water, and are periodically regenerated by means of sodium chloride solutions.

These resins are contained into vessels which have usually a cylindrical shape, wherein two containing grids define a volume a little greater than the volume occupied by the resins; in this way the resins can mix up to a certain extent, so to avoid a static heaping of the water, which could determine an unsufficient washing of the resins itselves.

This system can however facilitate the creation of preferential paths, channels or even stratifications of the resins, so that a given water quantity flows even if it has not been treated, or it has been treated in a unsufficient way.

In order to grant an efficient operation of the softener, the household appliances manufactures usually use a great quantity of resins, with the purpose to minimize the cited drawback, but without a real improvement in the device efficiency. In this way the devices result to be expensive, because of their oversizing, while the maximum flow rate of the water to treat is always limited.

Thus, it is the object of the present invention to obviate the cited drawbacks, improving the efficiency of the device by means of a control on the internal paths followed by the water, so to allow the resins to be contacted in the most uniform way.

To obtain said object, the subject of the present invention is a ion exchange resin device, comprising a container, wherein said resin is contained, and having an inlet hole and an outlet hole in order to allow a fluid to be treated to pass through, characterized in that, in order to allow the fluid to best contact the resin, in the inside of the container there are provided flow guide elements so arranged to oblige the flow to follow a given a path, inside the container, which is substantially longer than the direct line distance between the inlet hole and the outlet hole.

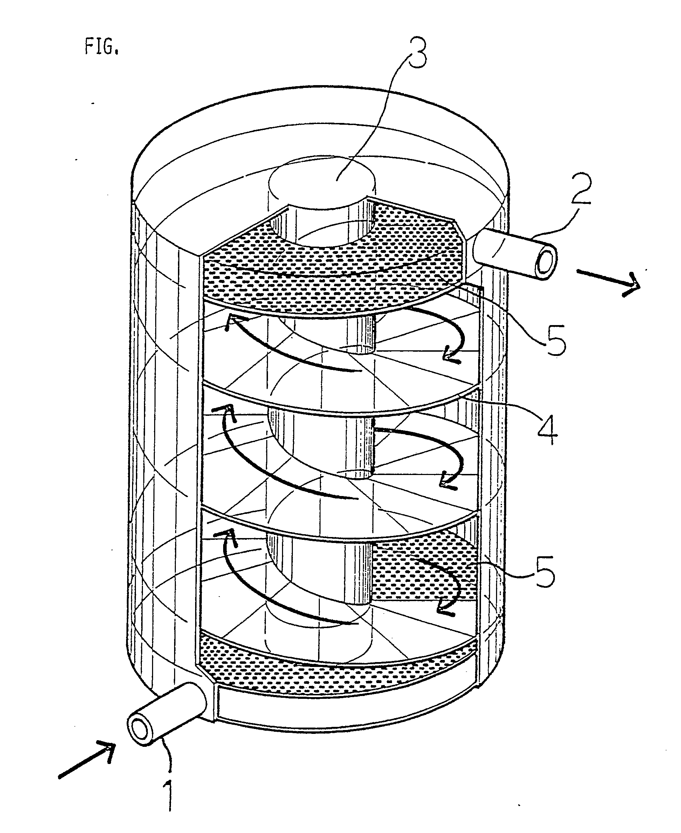

Other objects and advantages of the present invention will be clear from the detailed description which follows and from the attached drawing, which are supplied only as an explanatory and not limiting example, wherein the figure shows in elevation and partial section a softening device, according to the invention.

With reference to the sole annexed figure, it is represented, according to the invention, a softening device having a water inlet pipe 1, represented by a nozzle operating in the direction of the arrow, and an outlet pipe 2, this one too represented by a nozzle with an arrow indicating the flow direction. The device has a cylindrical shape and has a sleeve in the central axis 3, around which it is rolled up a helicoidal-shaped baffle 4; inside it there are arranged the resins, not shown in the figure for the sake simplicity. With reference number 5 there are shown two containing grids, which prevent the resins to flow out through the holes 1 and 2.

The embodiment of the invention has in this way the characteristic that it can be obtained a longer stay of the water inside the device, and consequently a longer time of contact of the liquid with the resins. In fact the water, by entering through the channel 1, starts to spirally rise the obliged path, shown in figure with the arrows, defined by the helicoidal baffle 4, and passes through the resins, which by this arrangement cannot take a stratified position. At the outlet of the pipe 2, the water reaches in this way a high softening level, by exploiting in the best way the quantity of the resins utilized.

Similar performances are offered by the device if the fluid at the inlet is not water coming from the supply mains, but for example the water and salt solution used in the softeners for dishwashers, when a regeneration of the resins, which have lost their exchange power, is required.

The above described device having an internal helicoidal shape does not exclude different embodiments with dividing baffles, appropriately shaped inserts or other, having the purpose to oblige the water to follow a minimum path through the resins; they are, in fact, part of the same inventing idea of the present patent application.

Particularly, there is the possibility to realize the ion exchange resin device by means of a glass-shaped container, i.e. closed at the bottom, and with the inlet pipe obtained on a lid arranged at the top of the glass; the container having the lateral wall perforated. In this way the water coming from the inlet hole, upstream placed, enters the glass containing the resins, passes through them by spreading itself in the whole container, and then exits through the holes of the lateral wall. To allow the treated water to be collected, there is arranged a receptacle, external to the glass, which lets the fluid flow through an outlet hole arranged downstream the device.

The characteristics of the described ion exchange resin device are clear from the given description and the annexed drawings.

Also clear are the advantages of the device object of the present invention.

Particularly, they are represented by the fact that the efficiency of the device is optimized; the quantity of elements needed for the ion exchange is reduced, particularly in the dishwashing machines, as the refilling of salt solution is concerned, a notable cost saving of the regenerating agent and the resin is obtained; in addition the size of the device is reduced, and this fact plays a great role, due to the highly reduced space available inside the household appliances.

It is obvious that many variations to the device described as an example are possible for the man skilled in the art, without departing from the novelty principles inherent to the invention.

For instance it is possible to use the same principle for depurators, which need the passage of a whichever fluid to treat, by means of ion exchange, with an exchanging substance; among these cases there are some types of filters and the mains running water depurators for domestic and not domestic use.

**Claims**

1. Ion exchange resin device, comprising a container, wherein said resin is contained, and having an inlet hole and an outlet hole in order to allow a fluid to be treated to pass through, characterized in that, in order to allow the fluid to best contacts the resin, inside the container there are provided flow guide elements so arranged to oblige the flow to follow a given path, inside the container, which is substantially longer than the direct line distance between the inlet hole (1) and the outlet hole(2).

2. Ion exchange resin device, according to claim 1, characterized in that said guide elements are shaped baffles (4).

3. Ion exchange resin device, according to claim 2, characterized in that said shaped baffles (4) are helicoidal shaped and are inserted in a cylindrical container, so that the fluid flow follows a helicoidal path.

4. Ion exchange resin device, according to claim 1, characterized in that said guide elements are obtained by means of holes realized in the lateral wall of the resin container from which the fluid outflows to be collected by a second container, which conveys said treated fluid towards the outlet hole.

5. Ion exchange resin device, according to claim 4, characterized in that the inlet hole is arranged upstream the outlet hole, and that the fluid flows through said holes without the action of forces internal to the device.

6. Ion exchange resin device, according to claim 1 or 4, characterized in that it is conceived for the use of a fluid which is mains running water, and that the device as the function of softening the same water.

7. Ion exchange resin device, according to claim 1 or 4, characterized in that the device operates as a filter for the fluid.

FIG.

European
Patent Office

EUROPEAN SEARCH
REPORT

Application Number

EP 90 11 8516

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-3 464 68   (J.B. COPLAND)<br>* Page 1, line 39 - page 2, line 71 *<br>- - - | 1-7 | B 01<br>J 47/02<br>C 02 F 1/42 |
| X | FR-A-2 207 091   (SANSON)<br>* Page 4, lines 1-36 *<br>- - - | 1,2,3,6,7 | |
| A | US-A-3 208 595   (BUTLER)<br>* Column 1, lines 32-39 *<br>- - - | 1,2,6,7 | |
| A | WO-A-8 202 150   (BRITA)<br>* Page 3, line 7 - page 5, line 27 *<br>- - - - - | 1,6,7 | |

| | TECHNICAL FIELDS SEARCHED (Int. Cl.5) |
|---|---|
| | B 01 J |

The present search report has been drawn up for all claims

| Place of search | Date of completion of search | Examiner |
|---|---|---|
| The Hague | 29 January 91 | WENDLING J.P. |